# EUROPEAN PATENT SPECIFICATION

(11) **EP 4 273 652 B1**
(45) Date of publication and mention of the grant of the patent: **07.10.2026**
(21) Application number: 22796116.6
(22) Date of filing: 27.04.2022
(51) Int. Cl.: G05B 23/02

(54) **SYSTEM AND METHOD FOR PREDICTING PROCESS CHANGES BY REFLECTING KEY FACTORS IN COMMERCIAL CHEMICAL PROCESS**
SYSTEM UND VERFAHREN ZUR VORHERSAGE VON PROZESSÄNDERUNGEN DURCH REFLEXION VON SCHLÜSSELFAKTOREN IN EINEM KOMMERZIELLEN CHEMISCHEN PROZESS
SYSTÈME ET PROCÉDÉ DE PRÉDICTION DE CHANGEMENTS DE PROCESSUS PAR RÉFLEXION DE FACTEURS CLÉS DANS UN PROCESSUS CHIMIQUE COMMERCIAL

(30) Priority: 28.04.2021 KR 20210055081
(43) Date of publication of application: 08.11.2023
(73) Proprietor: SK Gas Co., Ltd., Seongnam-si, Gyeonggi-do 13493 (KR)
(72) Inventor: HONG, Ung Gi, Seongnam-si Gyeonggi-do 13494 (KR); YEO, Sung Joo, Seongnam-si Gyeonggi-do 13494 (KR); KONG, Seung Hwan, Seongnam-si Gyeonggi-do 13494 (KR); KIM, Min Ho, Seongnam-si Gyeonggi-do 13494 (KR); SHIN, Hae Bin, Seongnam-si Gyeonggi-do 13494 (KR); CHOI, Hee Dong, Seongnam-si Gyeonggi-do 13494 (KR); KYE, Young Gook, Seongnam-si Gyeonggi-do 13494 (KR)
(74) Representative: BCKIP Part mbB
(86) International application number: PCT/KR2022/005974
(87) International publication number: WO 2022/231283

(56) References cited:
- WO-A2-2006/031749
- JP-A- 2003 058 206
- JP-A- 2020 166 749
- KR-A- 20080 105 439
- KR-A- 20190 135 445
- US-A1- 2014 365 195
- US-A1- 2020 064 324

## Description

### [Technical Field]

The present disclosure relates to process change prediction, and more particularly, to a system and method for predicting catalytic activity by using key factors in a commercial chemical process, wherein key factors are selected according to process operating conditions and applied to a prediction model so that the prediction accuracy of a change in catalytic activity can be increased.

### [Background Art]

In performing a series of processes comprised of many steps, integrity assurance and reliability are very important for organically linking every process. To achieve such integrity, the processes require the development of an efficient process management system that enables to detect any glitch in each process from input values of main facilities and diagnose the cause.

Generally, most of past data generated in an industrial process often has few variables and a linear data structure, which makes it possible to obtain enough prediction/classification results by an existing algorithm alone.

However, because of the development of ICT and sensor technology, data with several hundred or thousand variables have begun to be generated in manufacturing processes or in the fields of genetic engineering.

In particular, in contemporary industrial processes such as chemical and manufacturing processes and power plants, the scale of data is getting bigger and more complex over time, since various efforts are being made to meet safety, health, and environment-related regulations and maximize profits.

Thus, it is very critical to select and manage data that has a large effect on the creation of profits from among an enormous amount of complex data.

For example, a process operation condition in a commercial chemical process has short-term and long-term effects on catalytic activity, and the catalytic activity is directly linked to production yield. Thus, it is very important to predict catalytic activity from a short-term and long-term perspective.

From a short-term perspective, it is necessary to increase production yield by detecting a change in catalytic activity according to a process operation condition and improving catalytic activity through the optimization of the operation condition.

From a long-term perspective, in a commercial chemical process using a catalyst, the catalyst becomes deactivated with progression of the process operation, thus resulting in a decrease in activity, which requires replacement after a certain period of time. Such a catalyst replacement costs a lot of time and money, and therefore it is important to predict future catalytic activity and determine the catalyst lifetime and when to replace it.

Accordingly, it is necessary to develop a new technology that can increase the prediction accuracy of catalytic reaction activity by finding process operating conditions (key factors) largely affecting catalytic activity and reflecting them.
(Patent Document 1) Korean Laid-Open Patent No. 10-2036956
(Patent Document 2) Korean Laid-Open Patent No. 10-1508641
(Patent Document 3) Korean Laid-Open Patent No. 10-2019-0098484.
US 2014/365195 A1 discloses a system for monitoring a process determined by a set of process data in a multidimensional process data domain pertaining to process input-output data, the system comprising: means for acquiring a plurality of historic process data sets; means for obtaining a transformation from the multidimensional process data domain to a model data domain of lower dimension by performing multivariate data analysis; and means for transforming a current process data set to a model data set to monitor the process.

### [Disclosure]

### [Technical Problem]

The present disclosure has been made in an effort to solve the problems of process change prediction technologies in the conventional art, and an aspect of the present disclosure is to provide a system and method for predicting catalytic activity by using key factors in a commercial chemical process, wherein key factors are selected according to process operating conditions and applied to a prediction model so that the prediction accuracy of a change in catalytic activity can be increased.

An aspect of the present disclosure is to provide a system and method for predicting catalytic activity by using key factors in a commercial chemical process, which help efficiently manage the time and cost of product production and catalyst replacement by allowing to determine a product sales plan and when to replace the catalyst through accurate catalytic activity prediction.

An aspect of the present disclosure is to provide a system and method for predicting catalytic activity by using key factors in a commercial chemical process, which can increase product yield by detecting a change in catalytic activity according to a process operation condition and improving catalytic activity through the optimization of the operation condition.

The aspects of the present disclosure are not limited to the foregoing, and other aspects not mentioned herein will be able to be clearly understood by those skilled in the art from the following description.

### [Technical Solution]

To accomplish the above aspects, a system for predicting catalytic activity by using key factors in a commercial chemical process according to the present disclosure includes: a key factor extraction and individual tag importance backup unit that extracts yield key factors by calculating the importance of each tag, and backs up importance data for each tag; and a yield prediction model training and yield prediction performing unit that performs yield prediction model training by using the importance of each tag accumulated in the key factor extraction and individual tag importance backup unit, and performs yield prediction so as to output a yield prediction result, evaluates performance, and selects an optimal prediction model.

Here, the yield prediction model training and yield prediction performing unit includes: an importance calculation unit that calculates the importance of each tag/unit/section from the importance data backed up in the key factor extraction and individual tag importance backup unit; a yield prediction model training unit that performs yield prediction model training by using the calculated importance of each tag; a yield prediction performing unit that performs yield prediction through a yield prediction model trained in the yield prediction model training unit so as to output a yield prediction result; and a performance evaluation and optimal model selection unit that evaluates the performance of the yield prediction model and selects an optimal prediction model, by using the yield prediction result.

Furthermore, the key factor extraction and individual tag importance backup unit includes: a data extraction unit that extracts tag data in units of a set period; an outlier discrimination unit that discriminates and aggregates outliers by tag by using an outlier extraction reference master; an outlier processing unit that generates an input mart draft excluding the outliers; a derived variable generation unit that generates derived variables for each tag, and generates an advanced input mart having the derived variable added thereto; a yield calculation unit that backs up the result of calculation of a yield by realizing a target value via exclusion and correction of the outliers; and a key factor extraction unit that extracts a yield key factor by calculating importance of each tag, and backs up importance data for each tag.

Furthermore, data to be inputted into the data extraction unit includes: plant process operation data in an olefin production process, including data for each section, each unit, and each tag; laboratory data including LIMS (Laboratory Information Management System) data, plant event master data including a shut-down history, long integers/short integers, etc.; and past yield data including conversion rates and selectivity.

Furthermore, the plant process operation data in the olefin production process is sensor data including temperature, pressure, flow, and composition data, and past data accumulated continuously over a unit period of time.

Furthermore, the outlier extraction reference master which is used for the outlier discrimination unit to discriminate and aggregate outliers for each tag continuously updates reference values for extracting outliers over time in consistency with the concept of a machine learning-based system.

To accomplish other aspects, a method for predicting catalytic activity by using key factors in a commercial chemical process according to the present disclosure includes: a key factor extraction and individual tag importance backup step of extracting yield key factors by calculating the importance of each tag, and backing up importance data for each tag; an importance calculation step of calculating the importance of each tag/unit/section from the backed-up importance data; a yield prediction model training step of performing yield prediction model training by using the calculated importance of each tag; a yield prediction performing step of performing yield prediction through a yield prediction model trained in the yield prediction model training unit so as to output a yield prediction result; and a performance evaluation and optimal model selection step of evaluating the performance of the yield prediction model and selecting an optimal prediction model, by using the yield prediction result.

Here, in the importance calculation step, the importance of each unit/section is calculated based on the importance of each tag, wherein a unit is a mid-sized set of tags, a section is a large-size set of units, and a number of sections are put together to form a whole plant of an olefin production process.

Furthermore, based on the calculated variable importance (feature importance), the most important key factor is used as input into the prediction model, and unimportant data is excluded since it is deemed to be noise.

Furthermore, in the yield prediction model training step, yield prediction model training is performed, and a trained prediction model, model parameters, and model performance information are backed up, wherein outliers are removed, derived variables are generated, and the most important time-series data preprocessed and filtered through feature selection is updated weekly based on ML to generate an input mart.

Furthermore, the configured input mart is used to construct a yield forecasting model with high predictability by an ensemble of a time-series algorithm and a deep learning algorithm.

Furthermore, in the performance evaluation and optimal model selection step, part of the yield values backed up in the key factor extraction and individual tag importance backup step is not used in the model, but is kept in a blinded state and opened and compared when final performance evaluation is performed, so as to quantitatively evaluate prediction performance.

Furthermore, as a performance evaluation indicator, MAE (Mean Absolute Error), MAPE (Mean Absolute Percentage Error), and RMSE (Root Mean Square Error) are used.

Furthermore, the key factor extraction and individual tag importance backup step includes: a data extraction step of extracting tag data in units of a set period; an outlier discrimination step of discriminating and aggregating outliers by tag by using an outlier extraction reference master; an outlier processing step of generating an input mart draft excluding the outliers; a derived variable generation step of generating derived variables for each tag and generating an advanced input mart having the derived variable added thereto; a yield calculation step of backing up the result of calculation of a yield by realizing a target value via exclusion and correction of the outliers; and a key factor extraction step of extracting a yield key factor by calculating importance of each tag, and backs up importance data for each tag.

Furthermore, the outlier extraction reference master which is used in the outlier discrimination step to discriminate and aggregate outliers for each tag continuously updates reference values for extracting outliers over time in consistency with the concept of a machine learning-based system.

Furthermore, in the outlier discrimination step, a technique of using a statically based sigma and a technique of filtering outliers using a quantile/quartile value are applied in order to select and exclude or correct outliers and then use only filtered values as input.

Furthermore, in the outlier processing step, an input mart is an input data frame that is to be inputted to train a prediction model.

Furthermore, in the derived variable generation step, outliers are not used directly after being filtered from raw data, but derived variables are generated based on time differences and statistics to avoid information loss from data.

### [Advantageous Effects]

The above-described system and method for predicting catalytic activity by using key factors in a commercial chemical process according to the present disclosure have the following advantageous effects.

First, key factors are selected according to process operating conditions and applied to a prediction model so that the prediction accuracy of a change in catalytic activity can be increased.

Second, it is possible to efficiently manage the time and cost of product production and catalyst replacement by allowing to determine a product sales plan and when to replace the catalyst through accurate catalytic activity prediction.

Third, it is possible to increase product yield by detecting a change in catalytic activity according to a process operation condition and improving catalytic activity through the optimization of the operation condition.

### [Description of Drawings]

FIG. 1 is a block diagram of a system for predicting catalytic activity by using key factors in a commercial chemical process according to the present disclosure.
FIG. 2 is a detailed configuration diagram of the key factor extraction and individual tag importance backup unit.
FIG. 3 is a flowchart showing a key factor extraction process according to the present disclosure.
FIG. 4 is a flowchart of a method for predicting catalytic activity by using key factors in a commercial chemical process according to the present disclosure.
FIG. 5 is an output screen configuration diagram showing an example of catalytic activity prediction results that reflect key factors in a commercial chemical process according to the present disclosure.
FIG. 6 is a configuration diagram of the concept of a prediction model according to the present disclosure.
FIG. 7 is a configuration diagram showing a prediction model evaluation method according to the present disclosure.
FIG. 8 is a configuration diagram showing an example of a prediction model ensemble method according to the present disclosure.
FIGS. 9A to 9D are graphs of prediction model performance check results for each period according to the present disclosure.
FIGS. 10A to 10D are graphs of ensemble model performance check results according to the present disclosure.
FIGS. 11A and 11B are result graphs of virtual yields for a 2nd cycle that are generated based on yield values for a 1st cycle.
FIGS. 12A to 12C are graphs of 2nd cycle prediction results.

### [Best Mode for Carrying Out the Disclosure]

A system for predicting catalytic activity by using key factors in a commercial chemical process according to the present disclosure includes: a key factor extraction and individual tag importance backup unit that extracts yield key factors by calculating the importance of each tag, and backs up importance data for each tag; and a yield prediction model training and yield prediction performing unit that performs yield prediction model training by using the importance of each tag accumulated in the key factor extraction and individual tag importance backup unit, and performs yield prediction so as to output a yield prediction result, evaluates performance, and selects an optimal prediction model.

### [Mode for Disclosure]

Hereinafter, a system and method for predicting catalytic activity by using key factors in a commercial chemical process according to exemplary embodiments of the present disclosure will be described below in detail.

The features and advantages of the system and method for predicting catalytic activity by using key factors in a commercial chemical process according to the present disclosure will be apparent from the following descriptions of the embodiments.

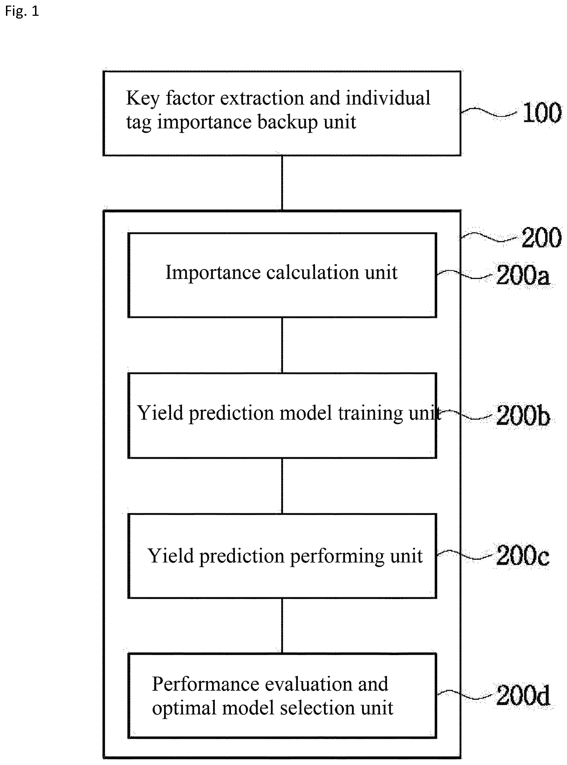

FIG. 1 is a block diagram of a system for predicting catalytic activity by using key factors in a commercial chemical process according to the present disclosure.

A system and method for predicting catalytic activity by using key factors in a commercial chemical process according to the present disclosure can increase the prediction accuracy of a change in catalytic activity by selecting key factors according to process operating conditions and applying them to a prediction model.

To this end, the present disclosure may include a component that extracts tag data in units of minutes/hours by using plant process operation data in an olefin production process, laboratory data, a plant event master, and past yield data.

The present disclosure may include a component that discriminates and aggregates outliers by tag by using an outlier extraction reference master and generates an input mart draft excluding the outliers.

The present disclosure may include a component that generates derived variables for each tag, generates an advanced input mart having the derived variable added thereto, and backs up the result of calculation of a yield by realizing a target value (yield) via exclusion and correction of the outliers.

The present disclosure may include a component that extracts a yield key factor by calculating importance of each tag and backs up importance data for each tag (variable).

The present disclosure may include a component that calculates the importance of each tag/unit/section from the backed-up importance data.

The present disclosure may include a component that performs yield prediction model training by using individual importance calculation results for each tag and backs up a trained prediction model, model parameters, and model performance information.

The present disclosure may include a component that performs yield prediction so as to output a yield prediction result, evaluates performance, and selects an optimal prediction model.

The following description has been given of a "factor related to catalytic activity" as an example of a "key factor affecting a process change", but is not limited thereto.

As shown in FIG. 1, a system for predicting catalytic activity by using key factors in a commercial chemical process according to the present disclosure includes: a key factor extraction and individual tag importance backup unit 100 that extracts yield key factors by calculating the importance of each tag, and backs up importance data for each tag; and a yield prediction model training and yield prediction performing unit 200 that performs yield prediction model training by using the importance of each tag accumulated in the key factor extraction and individual tag importance backup unit 100, and performs yield prediction so as to output a yield prediction result, evaluates performance, and selects an optimal prediction model.

Here, the yield prediction model training and yield prediction performing unit 200 includes an importance calculation unit 200a that calculates the importance of each tag/unit/section from the backed-up importance data, a yield prediction model training unit 200b that performs yield prediction model training by using the calculated importance of each tag, a yield prediction performing unit 200c that performs yield prediction through a yield prediction model trained in the yield prediction model training unit 200b so as to output a yield prediction result, and a performance evaluation and optimal model selection unit 200d that evaluates the performance of the yield prediction model and selects an optimal prediction model, by using the yield prediction result.

And, a detailed configuration of the key factor extraction and individual tag importance backup unit 100 is as follows.

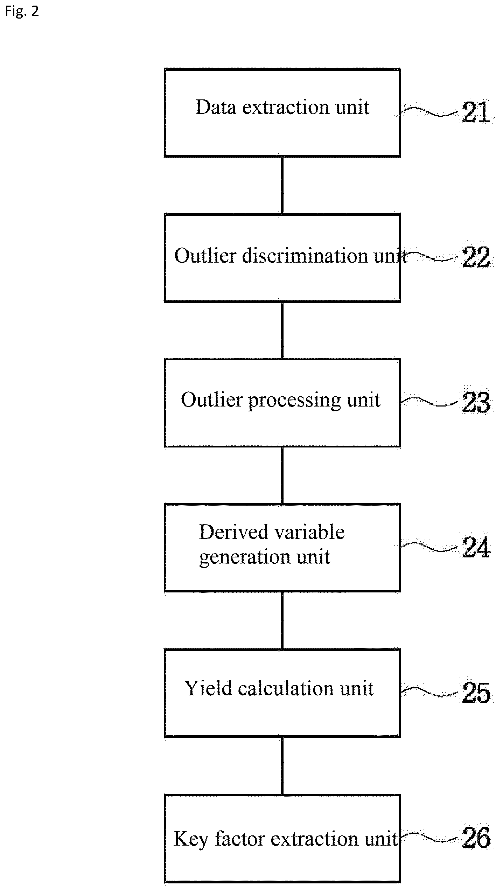

FIG. 2 is a detailed configuration diagram of the key factor extraction and individual tag importance backup unit.

The key factor extraction and individual tag importance backup unit 100 includes a data extraction unit 21 that extracts tag data in units of minutes/hours by using plant process operation data in an olefin production process, laboratory data, a plant event master, and past yield data, an outlier discrimination unit 22 that discriminates and aggregates outliers by tag by using an outlier extraction reference master, an outlier processing unit 23 that generates an input mart draft excluding the outliers, a derived variable generation unit 24 that generates derived variables for each tag, and generates an advanced input mart having the derived variable added thereto, a yield calculation unit 25 that backs up the result of calculation of a yield by realizing a target value (yield) via exclusion and correction of the outliers, and a key factor extraction unit 26 that extracts a yield key factor by calculating importance of each tag, and backs up importance data for each tag (variable).

Here, data to be inputted into the data extraction unit 21 may be plant process operation data in an olefin production process, including data for each section, each unit, and each tag, laboratory data including LIMS (Laboratory Information Management System) data, plant event master data including a shut-down history, long integers/short integers, etc., and past yield data including conversion rates and selectivity.

The data to be inputted into the data extraction unit 21 is over 9,000 kinds of process tag (sensor) data in an olefin production process plant which is various kinds of temperature, pressure, flow, and composition data, for example, data accumulated continuously over the past five years from now in units of a set period.

Here, the units of a set period may be seconds or minutes, but not limited thereto. Also, it is needless to say that the data accumulation period may be a period of time other than five years.

And, the outlier extraction reference master which is used for the outlier discrimination unit 22 to discriminate and aggregate outliers for each tag continuously updates reference values for extracting outliers over time in consistency with the concept of a machine learning-based system.

As an example, updates may be done daily, weekly, or monthly, but not limited thereto.

A process for extracting a key factor according to the present disclosure will be described below in detail.

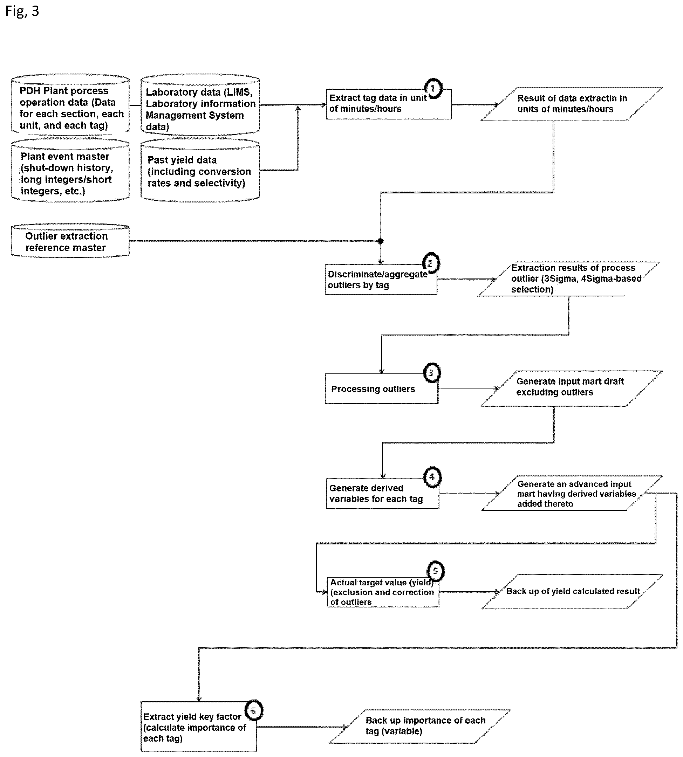

FIG. 3 is a flowchart showing a key factor extraction process according to the present disclosure.

In the method for selecting a key factor affecting catalytic activity in a commercial chemical process according to the present disclosure, as shown in FIG. 3, ① a data extraction step is performed to extract tag data in units of minutes/hours by using plant process operation data in an olefin production process, laboratory data, a plant event master, and past yield data.

Subsequently, ② an outlier discrimination step is performed to discriminate and aggregate outliers by tag by using an outlier extraction reference master.

And, ③ an outlier processing step is performed to generate an input mart draft excluding the outliers.

Subsequently, ④ a derived variable generation step is performed to generate derived variables for each tag and generate an advanced input mart having the derived variable added thereto.

And, ⑤ a yield calculation step is performed to back up the result of calculation of a yield by realizing a target value (yield) via exclusion and correction of the outliers.

Subsequently, ⑥ a key factor extraction step is performed to extract a yield key factor by calculating importance of each tag and back up importance data for each tag (variable).

Here, in the data extraction step, over 9,000 kinds of sensor data (tag data) as SKA process data is accumulated every 30 seconds.

And, process, laboratory, and plant data is integrated/utilized for accurate yield prediction, and the data is converted in units of minutes or hours for analysis and stored in a data warehouse.

And, in the outlier discrimination step, outliers are selected and excluded or corrected, and then only filtered values are used as input, to which a technique of using a statically based sigma and a technique of filtering outliers using a quantile/quartile value may be applied.

And, in the outlier processing step, an input mart is an input data frame (similar to a table format) that is to be inputted to train a prediction model.

And, in the derived variable generation step, outliers are not used directly after being filtered from raw data, but derived variables are generated based on time differences and statistics to make data abundant (to avoid information loss).

For example, over 9,000 kinds of data is extended laterally to several tens of thousands of dimensions. That is, the diversity of columns/variables is greatly extended.

A method for predicting catalytic activity by using key factors in a commercial chemical process according to the present disclosure will be described below in detail.

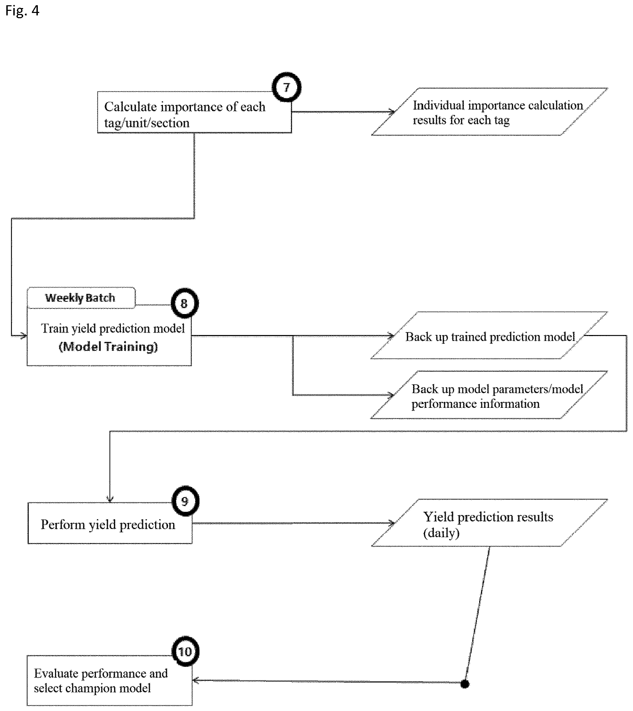

FIG. 4 is a flowchart of a method for predicting catalytic activity by using key factors in a commercial chemical process according to the present disclosure.

First, a key factor extraction and individual tag importance backup step is performed to extract yield key factors by calculating the importance of each tag and to back up importance data for each tag, and ⑦ the importance of each tag/unit/section is calculated from the backed-up importance data.

In this step, the importance of each tag is calculated to identify which variable most affects yield prediction and ups and downs in yield.

The importance of each unit/section is also calculated based on the importance of each tag, wherein a unit is a mid-sized set of tags, and a section is a large-size set of units. A number of sections are put together to form a whole plant of an olefin production process.

Based on the calculated variable importance (feature importance), the most important key factor is used as input into the prediction model, and unimportant data is excluded since it can be noise.

Subsequently, ⑧ yield prediction model training is performed by using the calculated importance of each tag, and a trained prediction model, model parameters, and model performance information are backed up.

In this step, outliers are removed, derived variables are generated, and the most important time-series data preprocessed and filtered through feature selection is updated weekly based on ML to generate an input mart and keep it up-to-date.

The input mart thus configured is used to construct a yield forecasting model with high predictability by an ensemble of a representative time-series algorithm and a latest deep learning algorithm.

Here, an ETS technique may be used as the time-series algorithm, and an LSTM technique may be used as the deep learning algorithm, but not limited thereto.

A result of the constructed yield forecasting model is Daily Yield Rate, which performs long-term prediction (12 months, 24 months, 36 months) as well as mid- to short-term prediction (upcoming 3 months, 6 months).

And, ⑨ yield prediction is performed to output a yield prediction result, and ⑩ performance is evaluated, and an optimal prediction model is selected.

Part of the yield values backed up in the step ⑤ is not used in the model, but is kept in a blinded state and opened and compared when final performance evaluation is performed, so as to quantitatively evaluate the excellence of prediction performance.

As a performance evaluation indicator, MAE (Mean Absolute Error), MAPE (Mean Absolute Percentage Error), and RMSE (Root Mean Square Error) may be used.

In this manner, once a key factor affecting catalytic activity in a commercial chemical process is selected, the key factor may be reflected so as to be applied to a constructed forecasting model (ML/DL-based yield forecasting) to predict catalytic activity.

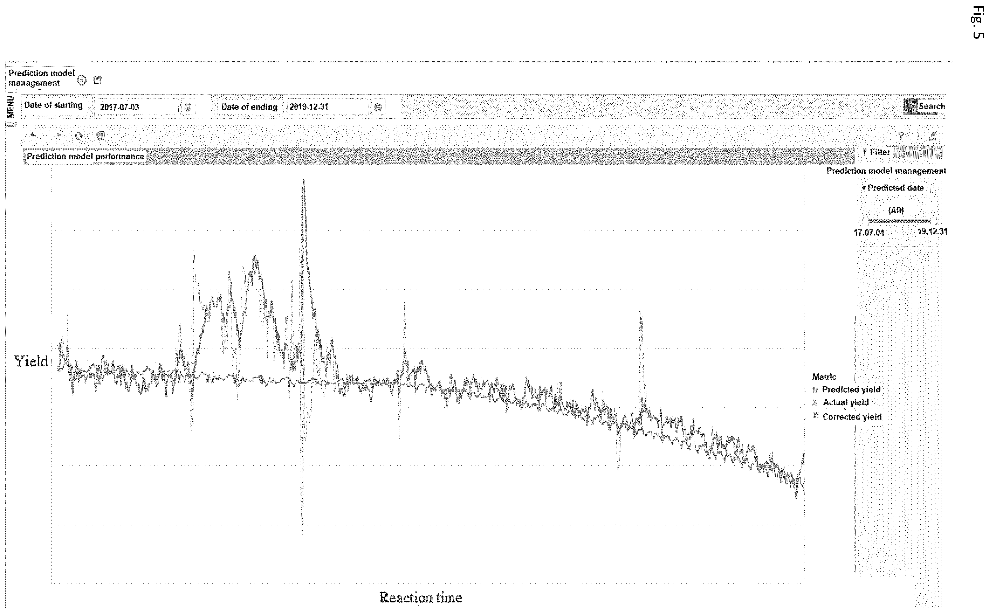

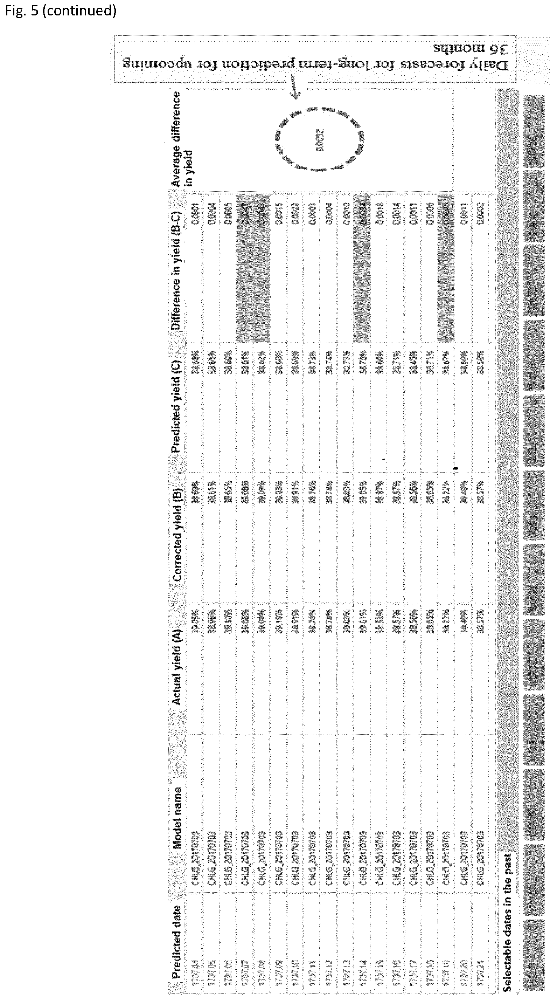

FIG. 5 is an output screen configuration diagram showing an example of catalytic activity prediction results that reflect key factors in a commercial chemical process according to the present disclosure.

The concept of a prediction model in a system and method for predicting catalytic activity by using key factors in a commercial chemical process according to the present disclosure will be described below.

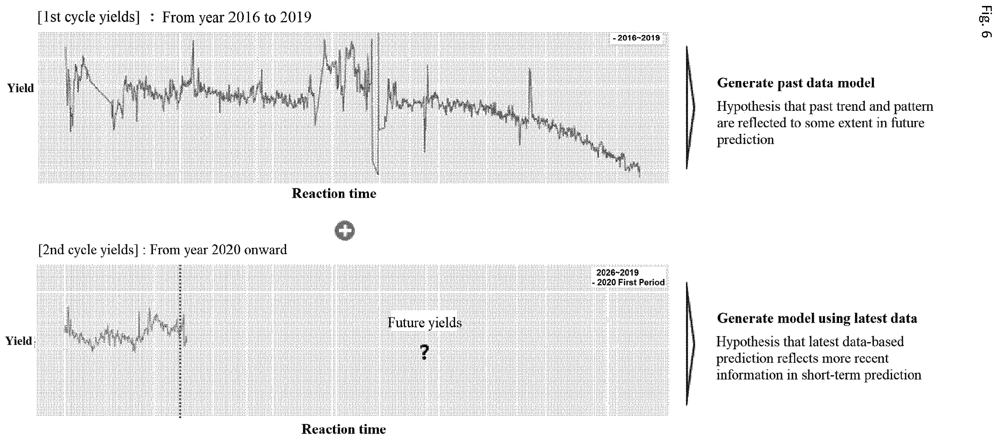

FIG. 6 is a configuration diagram of the concept of a prediction model according to the present disclosure.

FIG. 6 shows a concept of developing a yield prediction model with tag information and yield information for a 1st cycle (from the year 2016 to 2019) and a concept of predicting a future yield by developing another model with information for a 2nd cycle (the year 2020) and then combining the model for the 1st cycle and the model for the 2nd cycle.

The applied modeling method will be described below.

As an applied time-series model, an exponential smoothing model, a traditional time-series model of an ARIMA (AutoRegressive Integrated Moving Average) model, and a LSTM (Long Short Term Memory) deep learning model may be considered.

In exponential smoothing, a weighted average is calculated by giving a higher weight to recent observations and a lower weight to past observations, and the weights are decreased exponentially (exponential decay) from the present to the past, and a number of observations are used as the weighted average, which creates a smoothing effect.

In the ARIMA (AutoRegressive Integrated Moving Average) model, a time-series is predicted by a moving average (calculation of an average by shifting observations) which takes into account Autoregressive (the quality of past values affecting recent values) and trend (Integrated).

The LSTM (Long Short Term Memory) deep learning model is a kind of RNN, which solves the problems of long-term dependencies (information from past times is not used) which has been a drawback of RNNs, and which processes new information by learning patterns from important information from the past.

It is desirable that, among these models, exponential smoothing is applied, which works well in representing a yield trend because of its advantage in predicting data with complex seasonality and a regular pattern, or the LSTM (Long Short Term Memory) deep learning model is applied, which recognizes important past information as a pattern and eliminates unnecessary information and therefore works well in representing a yield pattern by using every information that affects results, out of entire data.

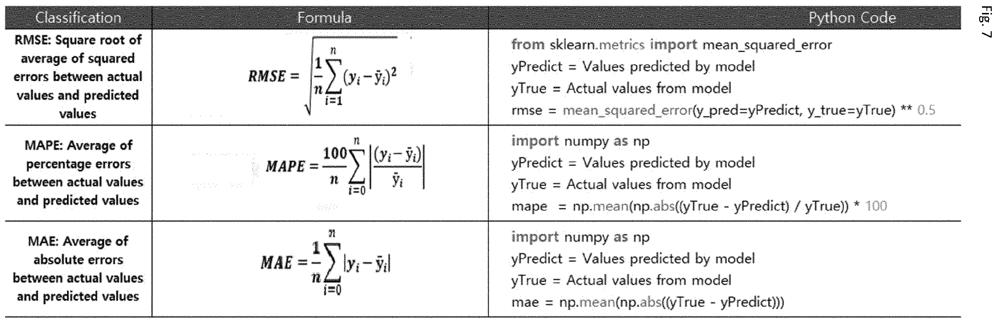

FIG. 7 is a configuration diagram showing a prediction model evaluation method according to the present disclosure.

As a performance evaluation indicator, MAE (Mean Absolute Error), MAPE (Mean Absolute Percentage Error), and RMSE (Root Mean Square Error) may be used.

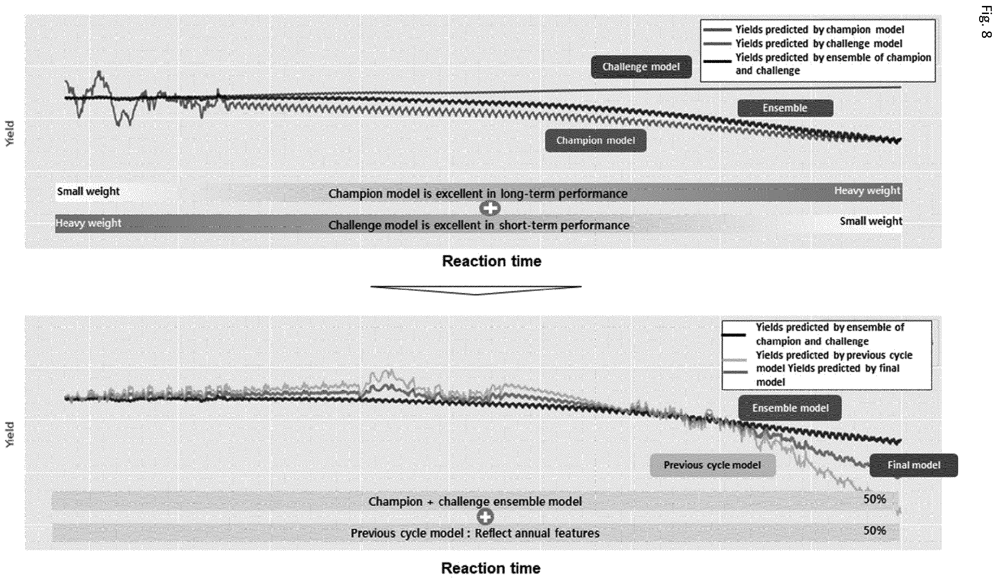

FIG. 8 is a configuration diagram showing an example of a prediction model ensemble method according to the present disclosure.

As an example, future yield predictability may be improved through a combination of champion (long-term prediction) + challenge (short-term prediction) + previous cycle model (reflecting annual features).

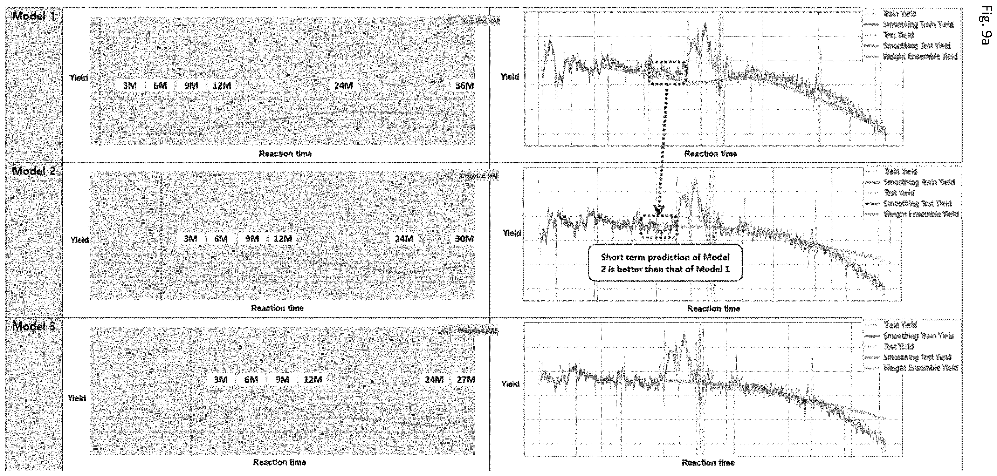

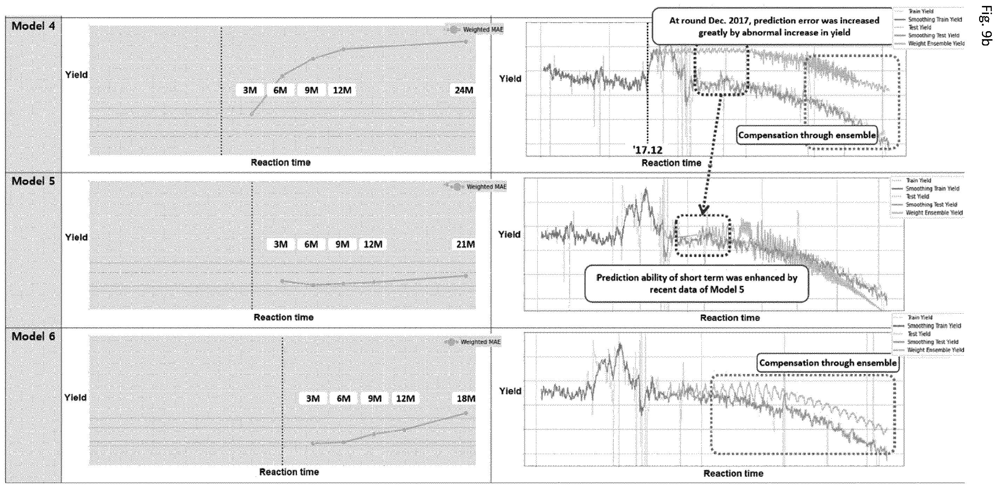

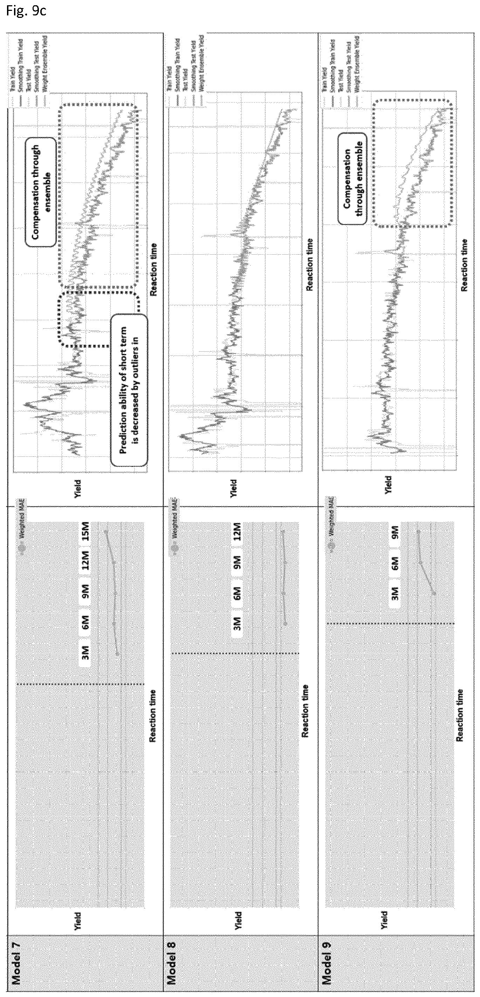

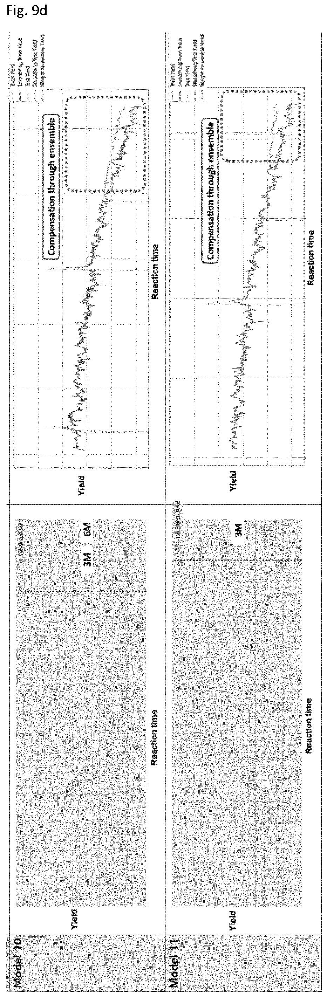

FIGS. 9A to 9D are graphs of prediction model performance check results for each period according to the present disclosure.

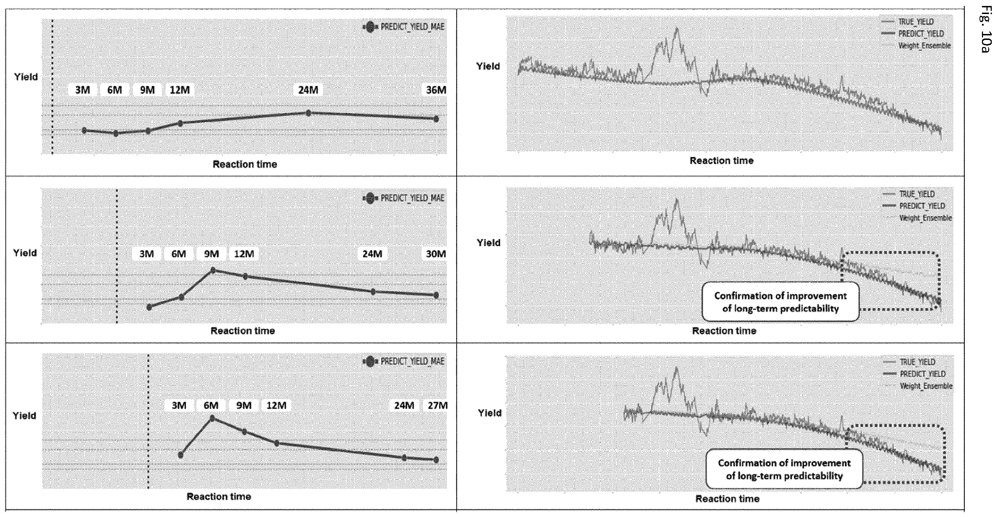

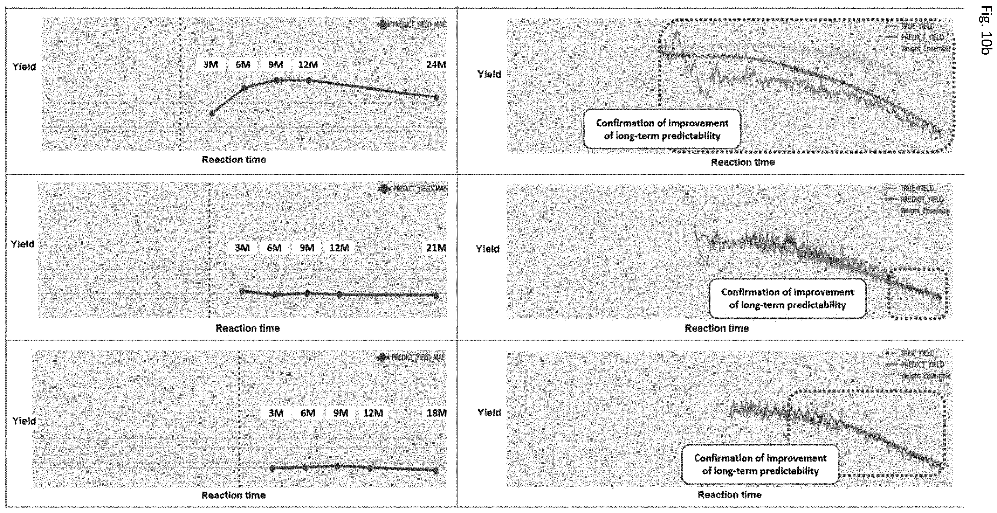

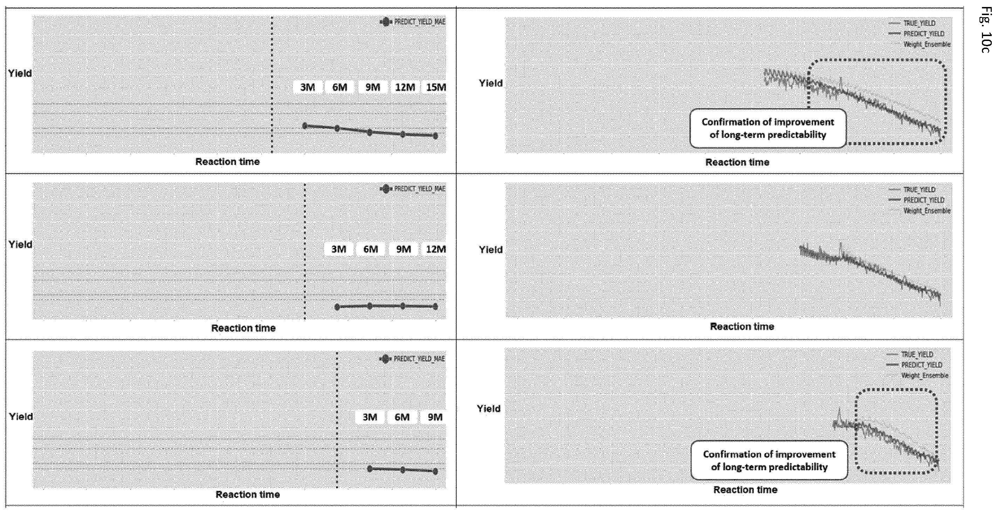

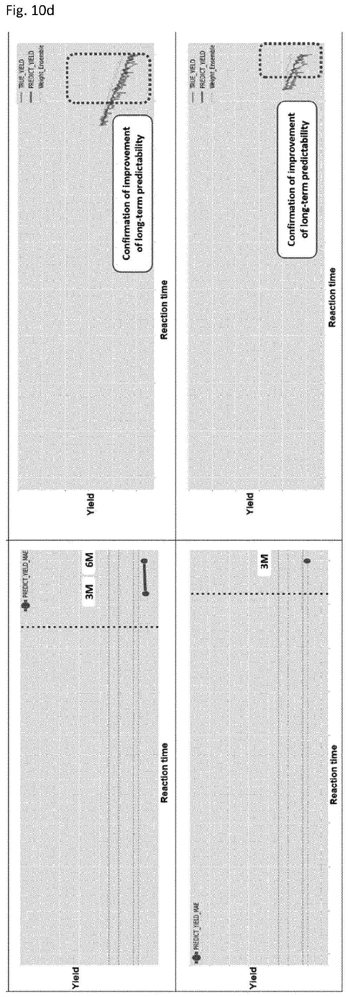

FIGS. 10A to 10D are graphs of ensemble model performance check results according to the present disclosure, which show error results for each interval (using an ensemble with the champion model) and entire prediction results (using an ensemble with the champion model).

As an example, prediction performance may be obtained by an ensemble of an initial model as the champion model and a model reflecting latest data as the challenge model.

To analyze the prediction performance of a final model, virtual yields for a 2nd cycle prediction model performance test may be generated, and final model performance may be measured by a virtual yield comparison with the final model.

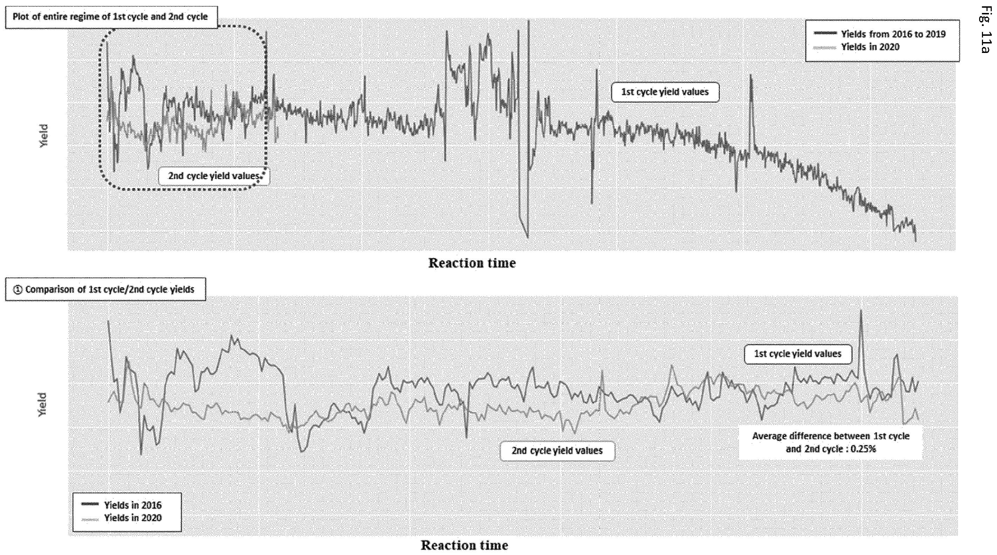

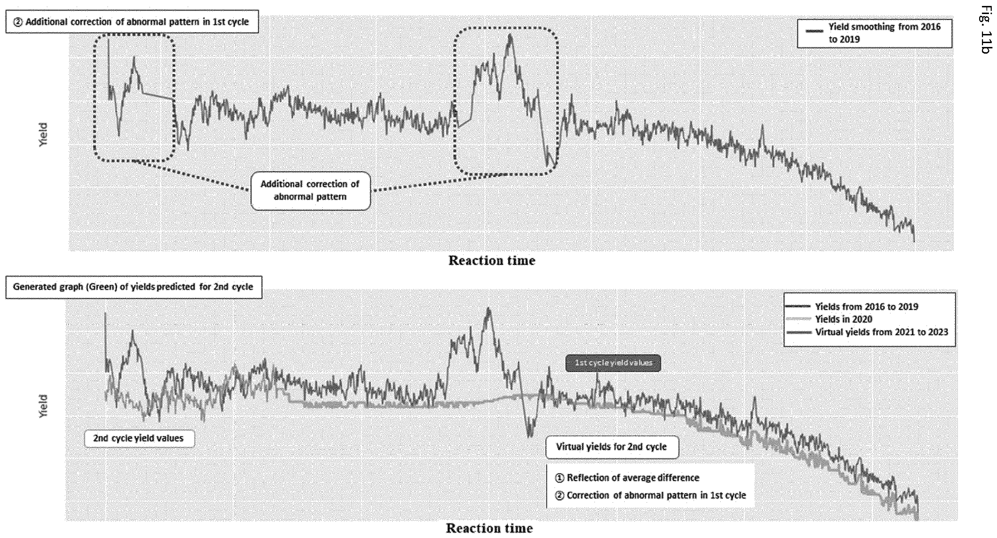

FIGS. 11A and 11B are result graphs of virtual yields for a 2nd cycle that are generated based on yield values for a 1st cycle, in which the average difference is checked by comparing the yields for the first year of the 1st cycle and the yields for the first year of the 2nd cycle, and an abnormal pattern in the 1st cycle is corrected.

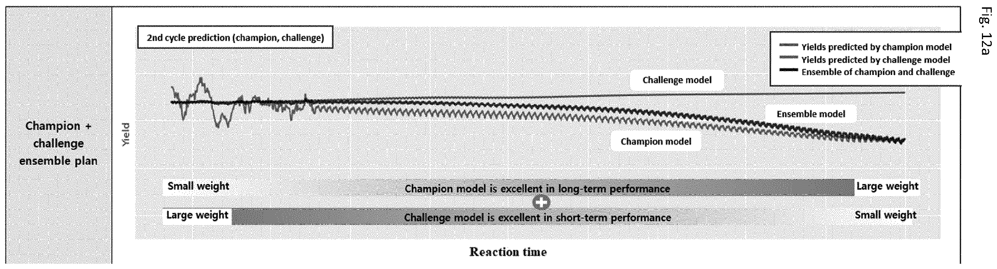

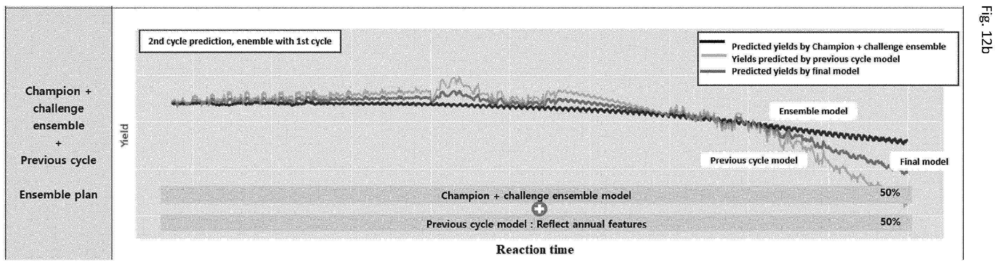

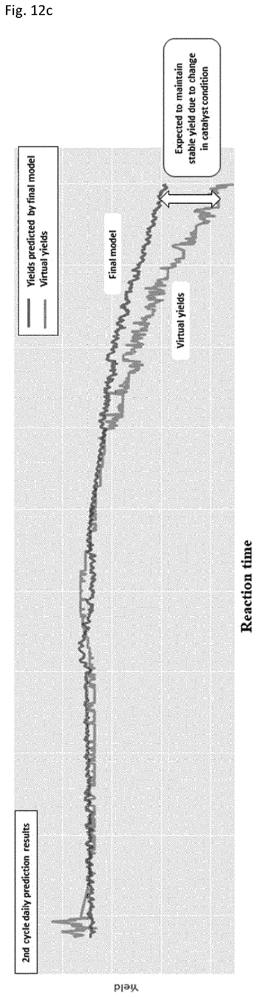

FIGS. 12A to 12C are graphs of 2nd cycle prediction results.

A first prediction is performed by an ensemble of a champion model (excellent in long-term prediction) and a challenge model (excellent in short-term prediction), and annual features are reflected by an ensemble with the 1st cycle model (PREC).

And, a future model performance virtual test is performed by comparing prediction results and virtual yields.

The above-described system and method for predicting catalytic activity by using key factors in a commercial chemical process according to the present disclosure can increase the prediction accuracy of a change in catalytic activity by selecting key factors according to process operating conditions and applying them to a prediction model.

This helps efficiently manage the time and cost of product production and catalyst replacement by allowing to determine a product sales plan and when to replace the catalyst through accurate catalytic activity prediction, and also can increase product yield by detecting a change in catalytic activity according to a process operation condition and improving catalytic activity through the optimization of the operation condition.

It will be understood by those skilled in the art to which the present disclosure belongs that the present disclosure may be implemented in modified forms without departing from the scope of the appended claims.

Therefore, the embodiments disclosed herein should be considered from an illustrative point of view, rather than a limitative point of view. The scope of the present disclosure is in accordance with the accompanying claims.

### (Explanation of Reference Numerals)

100: Key factor extraction and individual tag importance backup unit
200a: Importance calculation unit
200b: Yield prediction model training unit
200c: Yield prediction performing unit
200d: Optimal model selection unit

### [Industrial Applicability]

The present disclosure relates to process change prediction, and more particularly, to a system and method for predicting catalytic activity by using key factors in a commercial chemical process, wherein key factors are selected according to process operating conditions and applied to a prediction model so that the prediction accuracy of a change in catalytic activity can be increased.

## Claims

1. A system for predicting process changes by using key factors in a commercial chemical process, the system comprising:
a key factor extraction and individual tag importance backup unit (100) that is configured to extract yield key factors by calculating the importance of each tag, and backs up importance data for each tag; and
a yield prediction model training and yield prediction performing unit (200c) that is configured to perform yield prediction model training by using the importance of each tag accumulated in the key factor extraction and individual tag importance backup unit (100), and is configured to perform yield prediction so as to output a yield prediction result, evaluate performance, and select an optimal prediction model,
wherein the key factor extraction and individual tag importance backup unit (100) includes:
a data extraction unit (21) that is configured to extract tag data in units of a set period, wherein the tag data is sensor data;
an outlier discrimination unit (22) that is configured to discriminate and aggregate outliers by tag by using an outlier extraction reference master;
an outlier processing unit (23) that generates an input mart draft excluding the outliers;
a derived variable generation unit (24) that is configured to generate derived variables for each tag, and generate an advanced input mart having the derived variable added thereto;
a yield calculation unit (25) that is configured to back up the result of calculation of a yield by realizing a target value via exclusion and correction of the outliers; and
a key factor extraction unit (26) that is configured to extract a yield key factor by calculating importance of each tag, and backs up importance data for each tag.

2. The system of claim 1, wherein the yield prediction model training and yield prediction performing unit (200c) includes:
an importance calculation unit (200a) that is configured to calculate the importance of each tag from the importance data backed up in the key factor extraction and individual tag importance backup unit (100);
a yield prediction model training unit (200b) that is configured to perform yield prediction model training by using the calculated importance of each tag;
a yield prediction performing unit (200c) that is configured to perform yield prediction through a yield prediction model trained in the yield prediction model training unit (200b) so as to output a yield prediction result; and
a performance evaluation and optimal model selection unit (200d) that is configured to evaluate the performance of the yield prediction model and selects an optimal prediction model, by using the yield prediction result.

3. The system of claim 1, wherein data to be inputted into the data extraction unit (21) includes:
plant process operation data in an olefin production process, including data for each section, each unit, and each tag;
laboratory data including LIMS, Laboratory Information Management System, data, plant event master data including a shut-down history, long integers/short integers, etc.; and
past yield data including conversion rates and selectivity.

4. The system of claim 3, wherein the plant process operation data in the olefin production process is sensor data including temperature, pressure, flow, and composition data, and past data accumulated continuously over a unit period of time.

5. The system of claim 1, wherein the outlier extraction reference master which is used for the outlier discrimination unit (22) to discriminate and aggregate outliers for each tag is configured to continuously update reference values for extracting outliers over time in consistency with the concept of a machine learning-based system.

6. A method for predicting process changes by using key factors in a commercial chemical process, the method comprising:
a key factor extraction and individual tag importance backup step of extracting yield key factors by calculating the importance of each tag, and backing up importance data for each tag;
an importance calculation step of calculating the importance of each tag from the backed-up importance data;
a yield prediction model training step of performing yield prediction model training by using the calculated importance of each tag;
a yield prediction performing step of performing yield prediction through a yield prediction model trained in the yield prediction model training unit (200b) so as to output a yield prediction result; and
a performance evaluation and optimal model selection step of evaluating the performance of the yield prediction model and selecting an optimal prediction model, by using the yield prediction result,
wherein the key factor extraction and individual tag importance backup step includes:
a data extraction step of extracting tag data in units of a set period wherein the tag data is sensor data;
an outlier discrimination step of discriminating and aggregating outliers by tag by using an outlier extraction reference master;
an outlier processing step of generating an input mart draft excluding the outliers;
a derived variable generation step of generating derived variables for each tag and generating an advanced input mart having the derived variable added thereto;
a yield calculation step of backing up the result of calculation of a yield by realizing a target value via exclusion and correction of the outliers; and
a key factor extraction step of extracting a yield key factor by calculating importance of each tag, and backs up importance data for each tag.

7. The method of claim 6, wherein, in the importance calculation step, the importance of each unit/section is calculated based on the importance of each tag,
wherein a unit is a mid-sized set of tags, a section is a large-size set of units, and a number of sections are put together to form a whole plant of an olefin production process.

8. The method of claim 7, wherein, based on the calculated variable importance (feature importance), the most important key factor is used as input into the prediction model, and unimportant data is excluded since it is deemed to be noise.

9. The method of claim 6, wherein, in the yield prediction model training step, yield prediction model training is performed, and a trained prediction model, model parameters, and model performance information are backed up,
wherein outliers are removed, derived variables are generated, and the most important time-series data preprocessed and filtered through feature selection is updated weekly based on ML to generate an input mart.

10. The method of claim 9, wherein the configured input mart is used to construct a yield forecasting model with high predictability by an ensemble of a time-series algorithm and a deep learning algorithm.

11. The method of claim 6, wherein, in the performance evaluation and optimal model selection step, part of the yield values backed up in the key factor extraction and individual tag importance backup step is not used in the model, but is kept in a blinded state and opened and compared when final performance evaluation is performed, so as to quantitatively evaluate prediction performance.

12. The method of claim 11, wherein, as a performance evaluation indicator, MAE, Mean Absolute Error, MAPE, Mean Absolute Percentage Error, and RMSE, Root Mean Square Error, are used.

13. The method of claim 6, wherein the outlier extraction reference master which is used in the outlier discrimination step to discriminate and aggregate outliers for each tag continuously updates reference values for extracting outliers over time in consistency with the concept of a machine learning-based system.

14. The method of claim 13, wherein, in the outlier discrimination step, a technique of using a statically based sigma and a technique of filtering outliers using a quantile/quartile value are applied in order to select and exclude or correct outliers and then use only filtered values as input.

15. The method of claim 6, wherein, in the outlier processing step, an input mart is an input data frame that is to be inputted to train a prediction model, or
wherein, in the derived variable generation step, outliers are not used directly after being filtered from raw data, but derived variables are generated based on time differences and statistics to avoid information loss from data.

## Patentansprüche

1. System zur Vorhersage von Prozessänderungen unter Verwendung von Schlüsselfaktoren in einem kommerziellen chemischen Prozess, wobei das System umfasst:
eine Einheit (100) zur Extraktion von Schlüsselfaktoren und zur Sicherung der Wichtigkeit einzelner Tags, die dazu eingerichtet ist, Schlüsselfaktoren für die Ausbeute durch Berechnen der Wichtigkeit jedes Tags zu extrahieren und Wichtigkeitsdaten für jedes Tag zu sichern; und
eine Einheit (200c) zum Trainieren eines Ausbeutevorhersagemodells und zur Durchführung der Ausbeutevorhersage, die dazu eingerichtet ist, unter Verwendung der in der Einheit (100) zur Extraktion von Schlüsselfaktoren und zur Sicherung der Wichtigkeit einzelner Tags akkumulierten Wichtigkeit jedes Tags ein Training eines Ausbeutevorhersagemodells durchzuführen, und die dazu eingerichtet ist, eine Ausbeutevorhersage durchzuführen, um ein Ausbeutevorhersageergebnis auszugeben, die Leistung zu bewerten und ein optimales Vorhersagemodell auszuwählen,
wobei die Einheit (100) zur Extraktion von Schlüsselfaktoren und zur Sicherung der Wichtigkeit einzelner Tags umfasst:
eine Datenextraktionseinheit (21), die dazu eingerichtet ist, Tag-Daten in Einheiten eines festgelegten Zeitraums zu extrahieren, wobei die Tag-Daten Sensordaten sind;
eine Ausreißer-Unterscheidungseinheit (22), die dazu eingerichtet ist, unter Verwendung eines Referenzstammdatensatzes zur Ausreißerextraktion Ausreißer für jedes Tag zu unterscheiden und zu aggregieren;
eine Ausreißerverarbeitungseinheit (23), die einen Input-Mart-Entwurf unter Ausschluss der Ausreißer erzeugt;
eine Einheit (24) zur Erzeugung abgeleiteter Variablen, die dazu eingerichtet ist, abgeleitete Variablen für jedes Tag zu erzeugen und einen erweiterten Input-Mart zu erzeugen, dem die abgeleitete Variable hinzugefügt ist;
eine Ausbeuteberechnungseinheit (25), die dazu eingerichtet ist, das Ergebnis der Berechnung einer Ausbeute zu sichern, wobei durch Ausschluss und Korrektur der Ausreißer ein Zielwert realisiert wird; und
eine Schlüsselfaktorextraktionseinheit (26), die dazu eingerichtet ist, einen Schlüsselfaktor für die Ausbeute durch Berechnen der Wichtigkeit jedes Tags zu extrahieren und Wichtigkeitsdaten für jedes Tag zu sichern.

2. System nach Anspruch 1, wobei die Einheit (200c) zum Trainieren eines Ausbeutevorhersagemodells und zur Durchführung der Ausbeutevorhersage umfasst:
eine Wichtigkeitsberechnungseinheit (200a), die dazu eingerichtet ist, die Wichtigkeit jedes Tags aus den Wichtigkeitsdaten zu berechnen, die in der Einheit (100) zur Extraktion von Schlüsselfaktoren und zur Sicherung der Wichtigkeit einzelner Tags gesichert wurden;
eine Einheit (200b) zum Trainieren eines Ausbeutevorhersagemodells, die dazu eingerichtet ist, unter Verwendung der berechneten Wichtigkeit jedes Tags ein Training eines Ausbeutevorhersagemodells durchzuführen;
eine Einheit (200c) zur Durchführung der Ausbeutevorhersage, die dazu eingerichtet ist, mittels eines in der Einheit (200b) zum Trainieren eines Ausbeutevorhersagemodells trainierten Ausbeutevorhersagemodells eine Ausbeutevorhersage durchzuführen, um ein Ausbeutevorhersageergebnis auszugeben; und
eine Einheit (200d) zur Leistungsbewertung und Auswahl eines optimalen Modells, die dazu eingerichtet ist, unter Verwendung des Ausbeutevorhersageergebnisses die Leistung des Ausbeutevorhersagemodells zu bewerten und ein optimales Vorhersagemodell auszuwählen.

3. System nach Anspruch 1, wobei die in die Datenextraktionseinheit (21) einzugebenden Daten umfassen:
Anlagenprozessbetriebsdaten in einem Olefin-Herstellungsprozess, einschließlich Daten für jede Sektion, jede Einheit und jedes Tag;
Labordaten einschließlich Daten eines Laborinformationsmanagementsystems (LIMS), Anlagenereignis-Stammdaten einschließlich einer Abschalthistorie, Long-Integer/Short-Integer usw.; und
historische Ausbeutedaten einschließlich Konversionsraten und Selektivität.

4. System nach Anspruch 3, wobei die Anlagenprozessbetriebsdaten in dem Olefin-Herstellungsprozess Sensordaten einschließlich Temperatur-, Druck-, Durchfluss- und Zusammensetzungsdaten sowie historische Daten sind, die über einen Einheitszeitraum kontinuierlich akkumuliert wurden.

5. System nach Anspruch 1, wobei der Referenzstammdatensatz zur Ausreißerextraktion, der von der Ausreißer-Unterscheidungseinheit (22) verwendet wird, um Ausreißer für jedes Tag zu unterscheiden und zu aggregieren, dazu eingerichtet ist, Referenzwerte zur Extraktion von Ausreißern im Zeitverlauf kontinuierlich in Übereinstimmung mit dem Konzept eines auf maschinellem Lernen basierenden Systems zu aktualisieren.

6. Verfahren zur Vorhersage von Prozessänderungen unter Verwendung von Schlüsselfaktoren in einem kommerziellen chemischen Prozess, wobei das Verfahren umfasst:
einen Schritt zur Extraktion von Schlüsselfaktoren und zur Sicherung der Wichtigkeit einzelner Tags, in dem Schlüsselfaktoren für die Ausbeute durch Berechnen der Wichtigkeit jedes Tags extrahiert und Wichtigkeitsdaten für jedes Tag gesichert werden;
einen Wichtigkeitsberechnungsschritt, in dem die Wichtigkeit jedes Tags aus den gesicherten Wichtigkeitsdaten berechnet wird;
einen Schritt zum Trainieren eines Ausbeutevorhersagemodells, in dem unter Verwendung der berechneten Wichtigkeit jedes Tags ein Training eines Ausbeutevorhersagemodells durchgeführt wird;
einen Schritt zur Durchführung der Ausbeutevorhersage, in dem mittels eines in der Einheit (200b) zum Trainieren eines Ausbeutevorhersagemodells trainierten Ausbeutevorhersagemodells eine Ausbeutevorhersage durchgeführt wird, um ein Ausbeutevorhersageergebnis auszugeben; und
einen Schritt zur Leistungsbewertung und Auswahl eines optimalen Modells, in dem unter Verwendung des Ausbeutevorhersageergebnisses die Leistung des Ausbeutevorhersagemodells bewertet und ein optimales Vorhersagemodell ausgewählt wird,
wobei der Schritt zur Extraktion von Schlüsselfaktoren und zur Sicherung der Wichtigkeit einzelner Tags umfasst:
einen Datenextraktionsschritt, in dem Tag-Daten in Einheiten eines festgelegten Zeitraums extrahiert werden, wobei die Tag-Daten Sensordaten sind;
einen Ausreißer-Unterscheidungsschritt, in dem unter Verwendung eines Referenzstammdatensatzes zur Ausreißerextraktion Ausreißer für jedes Tag unterschieden und aggregiert werden;
einen Ausreißerverarbeitungsschritt, in dem ein Input-Mart-Entwurf unter Ausschluss der Ausreißer erzeugt wird;
einen Schritt zur Erzeugung abgeleiteter Variablen, in dem abgeleitete Variablen für jedes Tag erzeugt werden und ein erweiterter Input-Mart erzeugt wird, dem die abgeleitete Variable hinzugefügt ist;
einen Ausbeuteberechnungsschritt, in dem das Ergebnis der Berechnung einer Ausbeute gesichert wird, wobei durch Ausschluss und Korrektur der Ausreißer ein Zielwert realisiert wird; und
einen Schlüsselfaktorextraktionsschritt, in dem ein Schlüsselfaktor für die Ausbeute durch Berechnen der Wichtigkeit jedes Tags extrahiert und Wichtigkeitsdaten für jedes Tag gesichert werden.

7. Verfahren nach Anspruch 6, wobei im Wichtigkeitsberechnungsschritt die Wichtigkeit jeder Einheit/Sektion auf Grundlage der Wichtigkeit jedes Tags berechnet wird,
wobei eine Einheit eine mittelgroße Menge von Tags ist, eine Sektion eine große Menge von Einheiten ist und eine Anzahl von Sektionen zusammengefügt wird, um eine Gesamtanlage eines Olefin-Herstellungsprozesses zu bilden.

8. Verfahren nach Anspruch 7, wobei auf Grundlage der berechneten Variablenwichtigkeit (Merkmalswichtigkeit) der wichtigste Schlüsselfaktor als Eingabe in das Vorhersagemodell verwendet wird und unwichtige Daten ausgeschlossen werden, da sie als Rauschen angesehen werden.

9. Verfahren nach Anspruch 6, wobei im Schritt zum Trainieren eines Ausbeutevorhersagemodells ein Training eines Ausbeutevorhersagemodells durchgeführt wird und ein trainiertes Vorhersagemodell, Modellparameter und Modellleistungsinformationen gesichert werden,
wobei Ausreißer entfernt, abgeleitete Variablen erzeugt und die wichtigsten Zeitreihendaten, die vorverarbeitet und durch Merkmalsauswahl gefiltert wurden, auf Grundlage maschinellen Lernens (ML) wöchentlich aktualisiert werden, um einen Input-Mart zu erzeugen.

10. Verfahren nach Anspruch 9, wobei der konfigurierte Input-Mart verwendet wird, um mittels eines Ensembles aus einem Zeitreihenalgorithmus und einem Deep-Learning-Algorithmus ein Ausbeuteprognosemodell mit hoher Vorhersagbarkeit aufzubauen.

11. Verfahren nach Anspruch 6, wobei im Schritt zur Leistungsbewertung und Auswahl eines optimalen Modells ein Teil der in dem Schritt zur Extraktion von Schlüsselfaktoren und zur Sicherung der Wichtigkeit einzelner Tags gesicherten Ausbeutewerte nicht in dem Modell verwendet wird, sondern in einem verblindeten Zustand gehalten und offengelegt und verglichen wird, wenn die abschließende Leistungsbewertung durchgeführt wird, um die Vorhersageleistung quantitativ zu bewerten.

12. Verfahren nach Anspruch 11, wobei als Leistungsbewertungsindikatoren MAE (mittlerer absoluter Fehler), MAPE (mittlerer absoluter prozentualer Fehler) und RMSE (Wurzel des mittleren quadratischen Fehlers) verwendet werden.

13. Verfahren nach Anspruch 6, wobei der Referenzstammdatensatz zur Ausreißerextraktion, der im Ausreißer-Unterscheidungsschritt verwendet wird, um Ausreißer für jedes Tag zu unterscheiden und zu aggregieren, Referenzwerte zur Extraktion von Ausreißern im Zeitverlauf kontinuierlich in Übereinstimmung mit dem Konzept eines auf maschinellem Lernen basierenden Systems aktualisiert.

14. Verfahren nach Anspruch 13, wobei im Ausreißer-Unterscheidungsschritt eine Technik der Verwendung eines statisch basierten Sigmas und eine Technik zum Filtern von Ausreißern unter Verwendung eines Quantil-/Quartilwerts angewendet werden, um Ausreißer auszuwählen und auszuschließen oder zu korrigieren und anschließend nur gefilterte Werte als Eingabe zu verwenden.

15. Verfahren nach Anspruch 6, wobei im Ausreißerverarbeitungsschritt ein Input-Mart ein Eingabedatenrahmen ist, der eingegeben werden soll, um ein Vorhersagemodell zu trainieren, oder
wobei im Schritt zur Erzeugung abgeleiteter Variablen Ausreißer nicht unmittelbar verwendet werden, nachdem sie aus Rohdaten herausgefiltert wurden, sondern auf Grundlage von Zeitdifferenzen und Statistiken abgeleitete Variablen erzeugt werden, um einen Informationsverlust aus den Daten zu vermeiden.

## Revendications

1. Système de prédiction de variations de processus au moyen de facteurs clés dans un processus chimique commercial, ledit système comprenant :
une unité d'extraction de facteurs clés et de sauvegarde d'importance d'étiquette individuelle (100) configurée pour extraire des facteurs clés de rendement par calcul d'importance de chaque étiquette, et sauvegarder des données d'importance pour chaque étiquette ; et
une unité d'entraînement de modèle de prédiction de rendement et d'exécution de prédiction de rendement (200c) configurée pour exécuter un entraînement de modèle de prédiction de rendement au moyen de l'importance de chaque étiquette cumulée dans l'unité d'extraction de facteurs clés et de sauvegarde d'importance d'étiquette individuelle (100), et configurée pour exécuter une prédiction de rendement de manière à délivrer un résultat de prédiction de rendement, évaluer la performance et sélectionner un modèle de prédiction optimal,
où l'unité d'extraction de facteurs clés et de sauvegarde d'importance d'étiquette individuelle (100) comprend :
une unité d'extraction de données (21) configurée pour extraire des données d'étiquette dans des unités d'une période définie, lesdites données d'étiquette étant des données de capteur ;
une unité de discrimination de valeurs aberrantes (22) configurée pour discriminer et agréger des valeurs aberrantes par étiquette au moyen d'un maître de référence d'extraction de valeurs aberrantes ;
une unité de traitement de valeurs aberrantes (23) générant un projet de magasin de données d'entrée excluant les valeurs aberrantes ;
une unité de génération de variables dérivées (24) configurée pour générer des variables dérivées pour chaque étiquette, et générer un magasin d'entrée avancé comprenant la variable dérivée ajoutée ;
une unité de calcul de rendement (25) configurée pour sauvegarder le résultat de calcul d'un rendement en réalisant une valeur cible par exclusion et correction des valeurs aberrantes ; et
une unité d'extraction de facteur clé (26) configurée pour extraire un facteur clé de rendement par calcul de l'importance de chaque étiquette, et sauvegarder des données d'importance pour chaque étiquette.

2. Système selon la revendication 1, où l'unité d'entraînement de modèle de prédiction de rendement et d'exécution de prédiction de rendement (200c) comprend :
une unité de calcul d'importance (200a) configurée pour calculer l'importance de chaque étiquette à partir des données d'importance sauvegardées dans l'unité d'extraction de facteurs clés et de sauvegarde d'importance d'étiquette individuelle (100) ;
une unité d'entraînement de modèle de prédiction de rendement (200b) configurée pour exécuter un entraînement de modèle de prédiction de rendement au moyen de l'importance calculée pour chaque étiquette ;
une unité d'exécution de prédiction de rendement (200c) configurée pour exécuter une prédiction de rendement au moyen d'un modèle de prédiction de rendement entraîné dans l'unité d'entraînement de modèle de prédiction de rendement (200b), de manière à délivrer un résultat de prédiction de rendement ; et
une unité d'évaluation de performance et de sélection de modèle optimal (200d) configurée pour évaluer la performance du modèle de prédiction de rendement et sélectionner un modèle de prédiction optimal, au moyen du résultat de prédiction de rendement.

3. Système selon la revendication 1, où les données à entrer dans l'unité d'extraction de données (21) comprennent :
des données d'exploitation de processus d'usine dans un processus de production d'oléfine, comprenant des données pour chaque section, chaque unité et chaque étiquette ;
des données de laboratoire, comprenant des données LIMS, système de gestion d'informations de laboratoire, des données permanentes d'événements d'usine, comprenant un historique des arrêts, des entiers longs/courts, etc. ; et
des données de rendement passées, comprenant des taux de conversion et la sélectivité.

4. Système selon la revendication 3, où les données d'exploitation de processus d'usine dans le processus de production d'oléfine sont des données de capteur comprenant des données de température, de pression, de débit et de composition, et des données passées accumulées en continu pendant une période unitaire.

5. Système selon la revendication 1, où le maître de référence d'extraction de valeurs aberrantes utilisé pour l'unité de discrimination de valeurs aberrantes (22) pour discriminer et agréger des valeurs aberrantes de chaque étiquette met à jour en continu des valeurs de référence pour l'extraction de valeurs aberrantes dans le temps, conformément au concept d'un système basé sur l'apprentissage automatique.

6. Procédé de prédiction de variations de processus au moyen de facteurs clés dans un processus chimique commercial, ledit procédé comprenant :
une étape d'extraction de facteurs clés et de sauvegarde d'importance d'étiquette individuelle consistant à extraire des facteurs clés de rendement par calcul de l'importance de chaque étiquette, et à sauvegarder des données d'importance pour chaque étiquette ;
une étape de calcul d'importance consistant à calculer l'importance de chaque étiquette à partir des données d'importance sauvegardées ;
une étape d'entraînement de modèle de prédiction de rendement consistant à exécuter un entraînement de modèle de prédiction de rendement au moyen de l'importance calculée de chaque étiquette ;
une étape d'exécution de prédiction de rendement consistant à exécuter une prédiction de rendement au moyen d'un modèle de prédiction de rendement entraîné dans l'unité d'entraînement de modèle de prédiction de rendement (200b), de manière à produire un résultat de prédiction de rendement ; et
une étape d'évaluation de performance et de sélection de modèle optimal consistant à évaluer la performance du modèle de prédiction de rendement et à sélectionner un modèle de prédiction optimal, au moyen du résultat de prédiction de rendement,
où l'extraction de facteurs clés et la sauvegarde d'importance d'étiquette individuelle comprennent :
une étape d'extraction de données consistant à extraire des données d'étiquette dans des unités d'une période définie, lesdites données d'étiquette étant des données de capteur ;
une étape de discrimination de valeurs aberrantes consistant à discriminer et agréger des valeurs aberrantes par étiquette au moyen d'un maître de référence d'extraction de valeurs aberrantes ;
une étape de traitement de valeurs aberrantes consistant à générer un projet de magasin de données d'entrée excluant les valeurs aberrantes ;
une étape de génération de variables dérivées consistant à générer des variables dérivées pour chaque étiquette et à générer un magasin d'entrée avancé comprenant la variable dérivée ajoutée ;
une étape de calcul de rendement consistant à sauvegarder le résultat d'un calcul de rendement en réalisant une valeur cible par exclusion et correction des valeurs aberrantes ; et
une étape d'extraction de facteur clé consistant à extraire un facteur clé de rendement par calcul de l'importance de chaque étiquette, et à sauvegarder des données d'importance pour chaque étiquette.

7. Procédé selon la revendication 6, où, lors de l'étape de calcul d'importance, l'importance de chaque unité/section est calculée sur la base de l'importance de chaque étiquette,
où une unité est un ensemble d'étiquettes de taille moyenne, une section est un ensemble d'unités de grande taille, et où un certain nombre de sections sont assemblées pour former une installation complète d'un processus de production d'oléfine.

8. Procédé selon la revendication 7, où, sur la base de l'importance de variable calculée (importance caractéristique), le facteur clé le plus important est utilisé en tant qu'entrée dans le modèle de prédiction, et des données sans importance sont exclues puisque considérées comme du bruit.

9. Procédé selon la revendication 6, où, lors de l'étape d'entraînement du modèle de prédiction de rendement, un entraînement du modèle de prédiction de rendement est exécuté et un modèle de prédiction entraîné, des paramètres de modèle et des informations de performance de modèle sont sauvegardés,
où des valeurs aberrantes sont supprimées, des variables dérivées sont générées et les données de série temporelle les plus importantes prétraitées et filtrées par sélection de caractéristique sont mises à jour chaque semaine sur une base ML afin de générer un magasin d'entrée.

10. Procédé selon la revendication 9, où le magasin d'entrée configuré est utilisé pour construire un modèle de prédiction de rendement avec une prédictibilité élevée par un ensemble d'un algorithme de série temporelle et d'un algorithme d'apprentissage profond.

11. Procédé selon la revendication 6, où, lors de l'étape d'évaluation de performance et de de sélection de modèle optimal, une partie des valeurs de rendement sauvegardées lors de l'étape d'extraction de facteurs clés et de sauvegarde d'importance d'étiquette individuelle n'est pas utilisée dans le modèle, mais est maintenue dans un état aveugle et ouvert et comparée lorsque l'évaluation de performance finale est exécutée, de manière à évaluer quantitativement la performance de prédiction.

12. Procédé selon la revendication 11, où, sont utilisées comme indicateur d'évaluation de performance, une erreur absolue moyenne, MAE, une erreur absolue moyenne en pourcentage, MAPE, et une erreur quadratique moyenne, RMSE.

13. Procédé selon la revendication 6, où le maître de référence d'extraction de valeurs aberrantes utilisé lors de l'étape de discrimination de valeurs aberrantes pour discriminer et agréger des valeurs aberrantes pour chaque étiquette met à jour en continu des valeurs de référence pour l'extraction de valeurs aberrantes dans le temps, conformément au concept d'un système basé sur l'apprentissage automatique.

14. Procédé selon la revendication 13, où, lors de l'étape de discrimination de valeurs aberrantes, une technique d'utilisation d'un sigma à base statique et une technique de filtrage de valeurs aberrantes au moyen d'une valeur de quantile/quartile sont appliquées afin de sélectionner et exclure ou corriger des valeurs aberrantes, avant une utilisation exclusive de valeurs filtrées en tant qu'entrées.

15. Procédé selon la revendication 6, où, lors de l'étape de traitement de valeurs aberrantes, un magasin d'entrée est une trame de données d'entrée à saisir pour entraîner un modèle de prédiction, ou
où, lors de l'étape de génération de variables dérivées, des valeurs aberrantes ne sont pas utilisées directement après avoir été filtrées à partir de données brutes, mais des variables dérivées sont générées sur la base de différences temporelles et de statistiques afin d'éviter une perte d'informations à partir de données.
